# EUROPEAN PATENT APPLICATION

(11) **EP 4 708 502 A1**
(43) Date of publication of application: **11.03.2026**
(21) Application number: 24856799.2
(22) Date of filing: 20.08.2024
(51) Int. Cl.: H01M 50/24, H01M 50/211, H01M 50/502

(54) **CELL ASSEMBLY, BATTERY MODULE INCLUDING SAME, AND METHOD FOR MANUFACTURING CELL ASSEMBLY**

(30) Priority: 21.08.2023 KR 20230109395; 19.08.2024 KR 20240110661
(71) Applicant: LG Energy Solution, Ltd., Seoul 07335 (KR)
(72) Inventor: KANG, Da Hee, Daejeon 34122 (KR); KIM, Hye Hyeon, Daejeon 34122 (KR); LEE, Geun Jun, Daejeon 34122 (KR); JU, Yong Kyu, Daejeon 34122 (KR); KIM, Soo Youl, Daejeon 34122 (KR)
(74) Representative: Goddar, Heinz J.
(86) International application number: PCT/KR2024/012381
(87) International publication number: WO 2025/042188

(57) **Abstract**

A cell assembly according to an embodiment of the present disclosure may include a plurality of battery cells stacked on each other and each having an electrode lead; a first bonding body formed to contact the electrode leads of the plurality of battery cells; and a second bonding body formed to contact the plurality of battery cells and non-overlapped with the first bonding body, wherein the first bonding body may be made of a material having lower hardness than the second bonding body.

## Description

### TECHNICAL FIELD

### CROSS-REFERENCE TO RELATED APPLICATIONS

The present application claims priority to Korean Patent Application No. 10-2023-0109395 filed on August 21, 2023 and Korean Patent Application No. 10-2024-0110661 filed on August 19, 2024 in the Republic of Korea, the disclosures of which are incorporated by reference herein.

### TECHNICAL FIELD

The present disclosure relates to a cell assembly including a plurality of battery cells, a battery module including the same, and a method for manufacturing the cell assembly.

### BACKGROUND ART

As the use of portable devices such as mobile phones, laptops, camcorders, and digital cameras has become commonplace in modern society, the development of technologies related to such mobile devices has been active. Additionally, rechargeable secondary batteries are being used as a power source for electric vehicles (EVs), hybrid electric vehicles (HEVs), and plug-in hybrid electric vehicles (P-HEVs) as a way to solve air pollution caused by conventional gasoline vehicles using fossil fuels, and thus there is an increasing need for development of secondary batteries.

Currently commercialized secondary batteries include nickel cadmium batteries, nickel hydrogen batteries, nickel zinc batteries, lithium secondary batteries, and the like, and among these, lithium secondary batteries are in the spotlight because they have almost no memory effect compared to nickel-based secondary batteries and thus have advantages of free charge/discharge, very low self-discharge rate, and high energy density.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and a battery case that seals and accommodates the electrode assembly together with an electrolyte solution.

In general, lithium secondary batteries may be classified into can-type secondary batteries in which the electrode assembly is embedded in a metal can and pouch-type secondary batteries in which the electrode assembly is embedded in a pouch of an aluminum laminate sheet, depending on the shape of the exterior material.

In the case of secondary batteries used in small devices, two to three battery cells are disposed, but in the case of secondary batteries used in medium to large devices such as vehicles, a battery module in which multiple battery cells are electrically connected is used. In such a battery module, multiple battery cells are connected to each other in series or in parallel to form a battery cell stack, thereby improving capacity and power output. Additionally, one or more battery modules may be mounted together with various control and protection systems such as a battery management system (BMS) and a cooling system to form a battery pack.

In a battery pack in which multiple battery modules are assembled, the heat from multiple battery cells is added up in a narrow space, which may cause the temperature to rise rapidly and severely. In other words, in the case of battery modules in which multiple battery cells are stacked and battery packs mounted with such battery modules, high power output may be obtained, but it is not easy to remove the heat generated from the battery cells during charging and discharging. When the heat dissipation of the battery cells is not properly performed, the deterioration of the battery cells is accelerated, their lifespan is shortened, and the possibility of explosion or ignition increases.

Moreover, battery modules included in vehicle battery packs are frequently exposed to direct sunlight and may be subjected to high-temperature conditions such as in summer or desert areas. Additionally, since multiple battery modules are densely disposed to increase the driving range of a vehicle, a thermal runaway occurring in any one battery module may be easily propagated to neighboring battery modules, which may eventually lead to ignition or explosion of the battery pack itself.

Accordingly, there is a need for designing a model that does not lead to a fire or explosion of the battery pack itself even if a thermal runaway occurs in any one battery module.

### SUMMARY

### TECHNICAL PROBLEM

The present disclosure is directed to providing a cell assembly capable of delaying thermal propagation between a plurality of battery cells, a battery module including the same, and a method for manufacturing the cell assembly.

### TECHNICAL SOLUTION

A cell assembly according to an embodiment of the present disclosure may include a plurality of battery cells stacked on each other and each having an electrode lead; a first bonding body formed to contact the electrode leads of the plurality of battery cells; and a second bonding body formed to contact the plurality of battery cells and non-overlapped with the first bonding body, wherein the first bonding body may be made of a material having lower hardness than the second bonding body.

The second bonding body may contact at least a portion of the terrace portion of each of the plurality of battery cells.

The first bonding body may include a polymer foam that foams under heat, and the second bonding body may include a resin composed of a synthetic resin.

The polymer foam may be applied to the outer surface of the plurality of battery cells to surround the electrode leads.

The polymer foam may include a silicone-based foam.

The polymer foam may have a porous structure.

The electrode lead may include a first extension extending from the battery cell and surrounded by the polymer foam; and a second extension extending from the first extension and protruding further than the polymer foam.

The electrode lead may include a positive electrode lead and a negative electrode lead extending in different directions from the battery cell, wherein the polymer foam may include a first polymer foam formed to contact the positive electrode lead; and a second polymer foam spaced apart from the first polymer foam and formed to contact the negative electrode lead.

The polymer foam may be applied to the ends of the plurality of battery cells.

A battery module according to an embodiment of the present disclosure may include a module frame; and a cell assembly accommodated in the module frame, wherein the cell assembly may include a plurality of battery cells stacked on each other and each having an electrode lead; a first bonding body formed to contact the electrode leads of the plurality of battery cells; and a second bonding body formed to contact the plurality of battery cells and non-overlapped with the first bonding body, wherein the first bonding body may be made of a material having lower hardness than the second bonding body.

The second bonding body may contact at least a portion of the terrace portion of each of the plurality of battery cells.

The first bonding body may include a polymer foam that foams under heat, and the second bonding body may include a resin composed of a synthetic resin.

The battery module may further include a busbar frame mounted with a busbar to which the electrode leads are connected, wherein the polymer foam may be positioned between the plurality of battery cells and the busbar frame.

The battery module may further include an end cover covering an open end of the module frame, wherein the busbar frame may be positioned between the polymer foam and the end cover.

The electrode lead may include a first extension extending from the battery cell and surrounded by the polymer foam; and a second extension extending from the first extension and protruding further than the polymer foam and connected to the busbar.

A method for manufacturing a cell assembly according to an embodiment of the present disclosure may include a step of stacking a plurality of battery cells, each of which has an electrode lead; a step of applying a polymer foam to the stacked plurality of battery cells so as to contact the electrode leads of the plurality of battery cells; and a step of applying a resin to the stacked plurality of battery cells so as to contact the plurality of battery cells, wherein the polymer foam and the resin may be non-overlapped.

The step of applying the polymer foam and the step of applying the resin may be performed simultaneously or sequentially.

### ADVANTAGEOUS EFFECTS

A cell assembly according to an embodiment of the present disclosure includes a first bonding body having low hardness, which is bonded to a portion of a terrace portion where an electrode lead protrudes, and a second bonding body having high hardness, which is bonded to a portion of a terrace portion where an electrode lead does not protrude. As a result, when a flame is generated inside one battery cell, it is possible to prevent the propagation of the flame to surrounding cells by inducing a vent to the portion where the electrode lead protrudes.

In addition, effects that may be easily predicted by those skilled in the art from configurations according to preferred embodiments of the present disclosure may be included.

### BRIEF DESCRIPTION OF THE DRAWINGS

The accompanying drawings illustrate preferred embodiments of the present disclosure and together with the following detailed description, serve to provide a further understanding of the technical aspect of the present disclosure, and thus, the present disclosure should not be construed as being limited to the drawings.
FIG. 1 is a perspective view of a battery module according to an embodiment of the present disclosure.
FIG. 2 is an exploded perspective view of a battery module for describing a state in which a first bonding body is bonded to battery cells.
FIG. 3 is an exploded perspective view of a battery module for describing a state in which a second bonding body is bonded to battery cells.
FIG. 4 is a front view of the battery cell shown in FIG. 2.
FIG. 5 is a partial cross-sectional view schematically showing the connection relation between the cell assembly, the polymer foam, and the busbar shown in FIG. 3.
FIG. 6 is a flow chart of a method for manufacturing a cell assembly according to another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

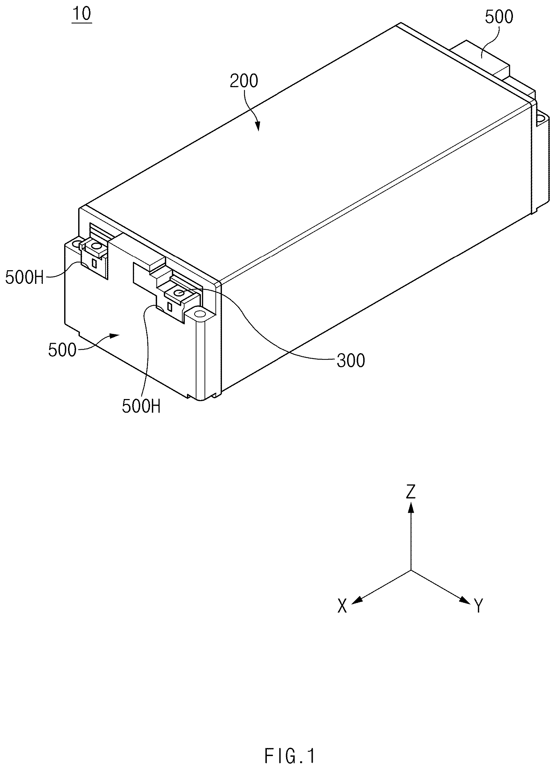

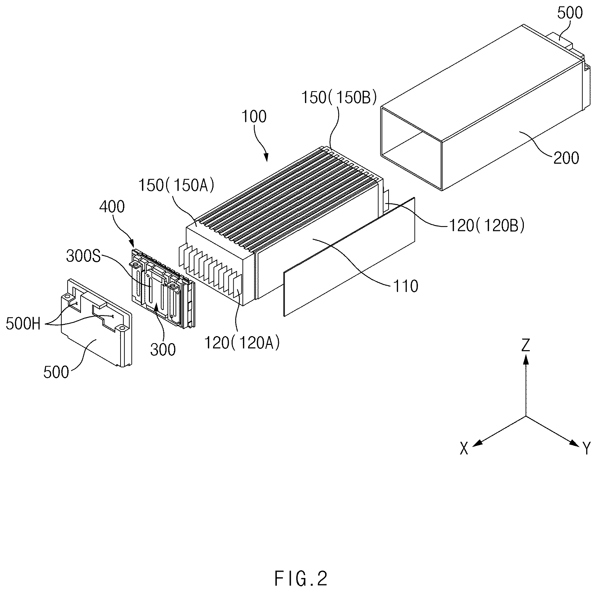

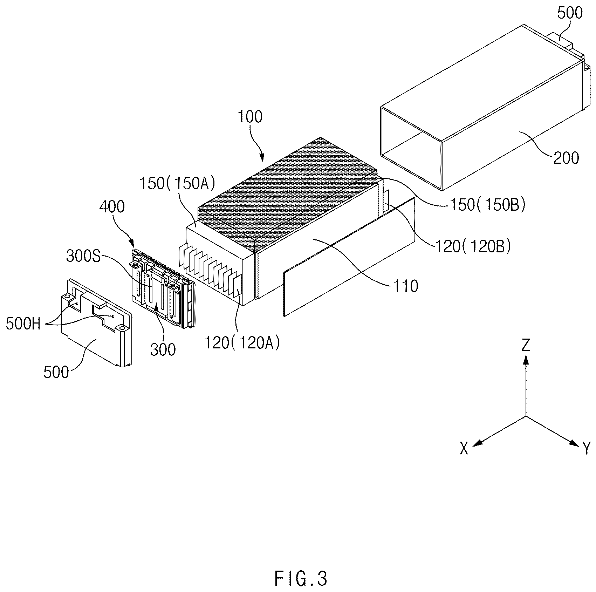

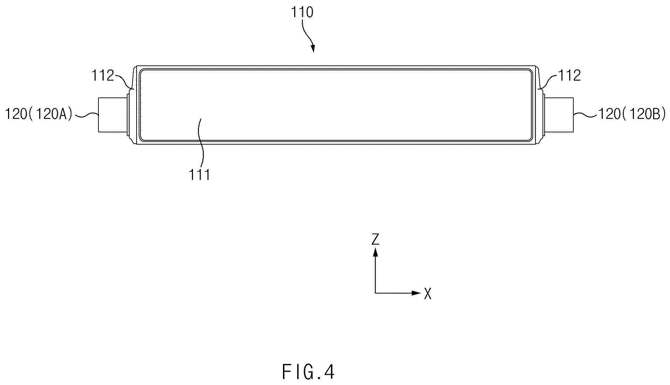

FIG. 1 is a perspective view of a battery module according to an embodiment of the present disclosure, and FIG. 2 is an exploded perspective view of a battery module for describing a state in which a first bonding body is bonded to battery cells. Additionally, FIG. 3 is an exploded perspective view of a battery module for describing a state in which a second bonding body is bonded to battery cells, and FIG. 4 is a front view of the battery cell shown in FIG. 2.

A battery module 10 according to an embodiment of the present disclosure may include a cell assembly 100 and a module frame 200.

The housing 200 may form the exterior of the battery module 10 together with an end plate 500 to be described later. The housing 200 may include a bottom surface, a top surface, and both side surfaces, and may be formed to be long in one direction. And, both ends of the housing 200 may be open.

The housing 200 may include a metal material having high rigidity. The housing 200 may be a mono frame formed integrally, but is not limited thereto.

Hereinafter, for convenience of description, a direction parallel to the length direction of the housing 200 is referred to as the first direction, a direction parallel to the width direction of the housing 100 is referred to as the second direction, and the height direction of the housing 100 is referred to as the third direction. That is, the x-axis, y-axis, and z-axis shown in FIGS. 1 and 2 may be parallel to the first direction, the second direction, and the third direction, respectively.

The cell assembly 100 may be accommodated in the module frame 200. The cell assembly 100 may include a plurality of battery cells 110 stacked on each other. An electrode lead 120 may be provided in each of the plurality of battery cells 110.

The plurality of battery cells 110 may be erected in a parallel manner within the housing 200. More specifically, the overall length direction of each battery cell 110 may be parallel to the first direction, and the overall width direction may be parallel to the third direction. And, the plurality of battery cells 110 may be aligned with respect to the second direction. Preferably, the plurality of battery cells 110 may be stacked on each other with respect to the second direction.

Referring to FIG. 4, each battery cell 110 may be a pouch-type battery cell in which an electrode assembly (not shown) is accommodated in a pouch-type battery case. More specifically, each battery cell 110 may include a receiving portion 111 in which an electrode assembly (not shown) is accommodated together with an electrolyte solution, a terrace portion 112 extending from the receiving portion 111, and an electrode lead 120 protruding outward through the terrace portion 112.

The electrode lead 120 may protrude in the overall length direction of each battery cell 110. The electrode lead 110 may be provided in a pair. More specifically, the pair of electrode leads 120 may include a positive electrode lead 120A and a negative electrode lead 120B.

The positive electrode lead 120A may be connected to the positive electrode of the electrode assembly, and the negative electrode lead 120B may be connected to the negative electrode of the electrode assembly.

The positive electrode lead 120A and the negative electrode lead 120B may extend in different directions from the battery cell 110. More specifically, the positive electrode lead 120A and the negative electrode lead 120B may extend in opposite directions. However, the present disclosure is not limited thereto, and it is obvious that the positive electrode lead 120A and the negative electrode lead 120B may extend side by side in the same direction depending on the type of the battery cell 100.

Although not shown in the drawing, the pouch-type battery case may be sealed by thermal fusion of the edge portions of each of a pair of cases formed of a multilayer pouch film in which a resin layer/metal layer/resin layer are sequentially laminated. In this case, a cup-shaped receiving portion 111 may be molded in at least one of the pair of cases, and the edge portions sealed to each other may form a terrace portion 112.

The receiving portion 111 may accommodate the electrode assembly together with the electrolyte solution, and the terrace portion 112 may be sealed in a state where a portion of the electrode lead 120 protrudes outward. That is, the electrode lead 120 may protrude outward through the terrace portion 112.

Referring to FIG. 2, the cell assembly 100 may include a first bonding body 150 and a second bonding body 160 formed to contact a plurality of battery cells 110. The first bonding body 150 and the second bonding body 160 may be bonded to the plurality of battery cells 110 so as to be non-overlapped with each other.

In particular, the first bonding body 150 may be bonded to a portion of the terrace portion 112 of the plurality of battery cells 110 where the electrode leads 120 protrude. Additionally, the second bonding body 160 may be bonded to a portion of the terrace portion 112 of the plurality of battery cells 110 where the electrode leads 120 do not protrude.

Here, the first bonding body 150 and the second bonding body 160 may be made of materials having different hardnesses. In particular, the first bonding body 150 may be made of a material having lower hardness than the second bonding body 160. In this case, the second bonding body 160 presses the terrace portion 112 more strongly than the first bonding body 150, and thus, when the internal pressure of the battery cell 110 increases, the vent may be induced to the part where the first bonding body 150 is bonded.

That is, the cell assembly 100 according to an example of the present disclosure has the structure as described above, and thus, even when a flame is generated in one battery cell 110, it is possible to delay or prevent the propagation of the flame to other adjacent battery cells 110.

Additionally, an empty space in which the electrolyte solution is accommodated may be formed on the inside of the portion of the terrace portion 112 of the battery cell 110 where the electrode leads 120 protrude. Here, as the first bonding body 150 having relatively low hardness is bonded to the portion of the terrace portion 112 where the electrode leads 120 protrude, the corresponding portion may be weakly pressed to form a free volume in which the electrolyte solution is accommodated.

That is, the cell assembly 100 according to an example of the present disclosure may reconsider the space utilization of the internal space of the pouch by bonding the first bonding body 150 having relatively low hardness to the portion of the terrace portion 112 where the electrode leads 120 protrude.

Meanwhile, the first bonding body 150 and the second bonding body 160 may be made of various materials. For example, the first bonding body 150 may be a polymer foam 150 having relatively low hardness, and the second bonding body 160 may include a resin composed of a synthetic resin.

At this time, the polymer foam 150 may foam under heat. When a flame is generated inside the battery cell 110, the polymer foam 150 may foam under heat. In this case, the pressure applied by the polymer foam 150 to the terrace portion 112 of the battery cell 110 is weakened, and a vent may be induced in the portion of the battery cell 110 where the polymer foam 150 is bonded.

That is, even when a flame is generated in one battery cell 110, the flame is not discharged toward other adjacent battery cells 110, which may delay or prevent the propagation of the flame to other adjacent battery cells 110.

The polymer foam 150 may prevent or delay the occurrence of a thermal propagation in a plurality of battery cells 110. In this regard, when a flame is generated in any one battery cell 110, high-temperature gases may be released together with sparks toward the electrode leads 120. As a result, there is a concern that the flame may quickly spread to other battery cells 110. However, the polymer foam 150 may sufficiently delay the release of the gases and sparks toward the electrode leads 120.

The polymer foam 150 may be applied to the ends of the plurality of battery cells 110. Each electrode lead 120 may protrude further than the polymer foam 150. The shape of the polymer foam 150 is not limited.

The polymer foam 150 may be positioned between the plurality of battery cells 110 and the busbar frame 400. That is, the busbar frame 400 may be positioned between the polymer foam 150 and the end cover 500. Accordingly, even if high-temperature gases and sparks are discharged from the battery cells 110, the polymer foam 150 may delay the release of the gases and sparks toward the busbar frame 400 and the end cover 500 as much as possible.

A pair of polymer foams 150 may be provided in the cell assembly 100. The pair of polymer foams 150 may include a first polymer foam 150A formed to contact the positive electrode lead 120A and a second polymer foam 150B formed to contact the negative electrode lead 120B.

The first polymer foam 150A and the second polymer foam 150B may be spaced apart from each other. In the cell assembly 100, the first polymer foam 150A and the second polymer foam 150B may be positioned on opposite sides of each other. Since the polymer foam 150 is applied only to both end sides of the plurality of battery cells 110, a decrease in energy density of the cell assembly 100 may be minimized.

However, when the positive electrode lead 120A and the negative electrode lead 120B extend in parallel to each other, a single polymer foam 150 may be formed to contact the positive electrode lead 120A and the negative electrode lead 120B.

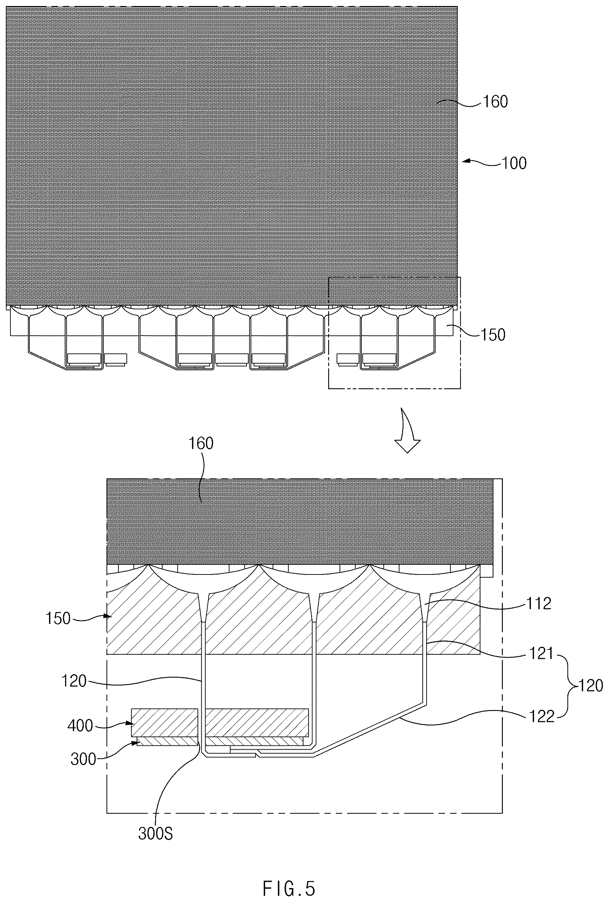

The polymer foam 150 will be described in detail later with reference to FIG. 5.

Meanwhile, the battery module 10 may further include a busbar frame 400 mounted with a busbar 300 to which an electrode lead 120 is connected.

The busbar frame 400 may have an insulating material such as resin. That is, the busbar frame 400 may insulate the busbar 300 and the housing 200 from each other.

The busbar frame 400 may be mounted with a busbar 300 electrically connected to a plurality of battery cells 110, more specifically, electrode leads 120 of the plurality of battery cells 110.

The busbar 300 may be mounted on the outside of the busbar frame 400. That is, the busbar 300 may be positioned on the opposite side of the cell assembly 100 with respect to the busbar frame 400.

A plurality of lead slits may be formed in the busbar frame 400, and a slit 300S facing the lead slits may be formed in the busbar 300. Each electrode lead 120 may sequentially pass through the lead slit of the busbar frame 400 and the slit 300S of the busbar 300. Therefore, a portion of the end side of each electrode lead 120 may be drawn out to the outside of the busbar 300, and the portion of the end side may be bent and fixed to the busbar 300 by welding or the like.

A pair of busbar frames 400 may be provided on both sides of the cell assembly 100. Therefore, the positive electrode lead 120A protruding from each battery cell 110 to one side may be connected to the busbar 300 mounted on one busbar frame 400, and the negative electrode lead 120B protruding from each battery cell 110 to the other side may be connected to the busbar 300 mounted on the other busbar frame 400.

The battery module 10 may further include an end cover 500 covering the busbar frame 400 from the outside. A pair of end covers 500 covering the pair of busbar frames 400 from the outside may be provided. The pair of end covers 500 may be fastened to both ends of the housing 200. The pair of end covers 500 may cover both open ends of the housing 200.

An opening 500H through which a portion of the busbar 300 mounted on the busbar frame 400 is exposed may be formed in the end cover 500. Therefore, the busbar 300 may be electrically connected to an external electronic device or the like through the opening 500H.

FIG. 5 is a partial cross-sectional view schematically showing the connection relation between the cell assembly, the polymer foam, and the busbar shown in FIG. 3.

As described above, the cell assembly 100 may include a polymer foam 150 formed to contact the electrode leads 120 of the plurality of battery cells 110.

The polymer foam 150 may be applied to the outer surface of the plurality of battery cells 110 to surround the electrode leads 120. The polymer foam 150 may be applied to the end sides of the plurality of battery cells 110 in the overall length direction. The polymer foam 150 may contact the terrace portion 112 from which the electrode leads 120 protrude in the plurality of battery cells 110.

The polymer foam 150 may be formed to cover the boundary between the terrace 112 of each battery cell 110 and the electrode leads 120. Accordingly, when a flame is generated in the battery cell 110, the ejection of the gases and sparks caused by the breakdown of the sealing between the insulating film surrounding the electrode leads 120 and the terrace 112 may be delayed as much as possible.

Each electrode lead 120 may protrude further than the polymer foam 150. More specifically, each electrode lead 120 may include a first extension 121 extending from the battery cell 110 and surrounded by the polymer foam 150, and a second extension 122 extending from the first extension 121 and protruding further than the polymer foam 150. The second extension 122 may be connected to the busbar 300 mounted on the busbar frame 400 by welding or the like.

The polymer foam 150 may have an insulating material. Additionally, the polymer foam 150 may have a material with excellent flame retardancy and heat dissipation.

Preferably, the polymer foam 150 may include a silicone-based foam. As an example, the silicone-based foam may include silicone rubber. As another example, the silicone-based foam may include polydimethylsiloxane (PDMS).

Since the silicone-based foam has excellent flame retardancy, it has the advantage of further delaying the thermal propagation in a plurality of battery cells 110. However, the present disclosure is not limited thereto, and a known material having high flame retardancy and/or heat dissipation may be adopted as the material of the polymer foam 150.

The polymer foam 150 may have a porous structure. Therefore, the polymer foam 150 may be lightweight, and an increase in the weight of the cell assembly 100 may be minimized.

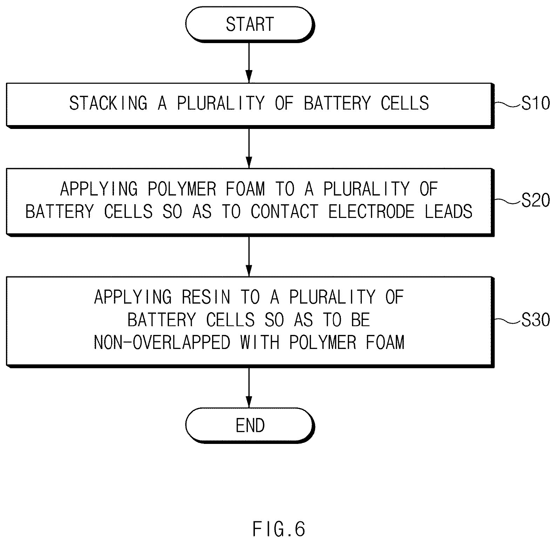

FIG. 6 is a flow chart of a method for manufacturing a cell assembly according to another embodiment of the present disclosure.

Hereinafter, a method for manufacturing the cell assembly 100 described above will be described as another embodiment of the present disclosure.

A method for manufacturing a cell assembly (hereinafter, 'manufacturing method') according to another embodiment of the present disclosure may include a step S10 of stacking a plurality of battery cells 110, a step S20 of applying a polymer foam 150 to the plurality of battery cells 110 so as to contact the electrode leads 120, and a step S30 of applying a resin 160 to the stacked plurality of battery cells so as to contact the plurality of battery cells. In this case, the polymer foam 150 and the resin 160 may be non-overlapped.

In this case, the step S20 of applying the polymer foam 150 to the plurality of battery cells 110 and the step S30 of applying the resin 160 to the plurality of battery cells 110 may be performed simultaneously or sequentially. For example, the polymer foam 150 may be applied to the plurality of battery cells 110 and then the resin 160 may be applied thereto, or the resin 160 may be first applied to the plurality of battery cells 110 and then the polymer foam 150 may be applied thereto. Additionally, the polymer foam 150 and the resin 160 may be applied simultaneously to the plurality of battery cells 110.

In the step S20 of applying the polymer foam 150, the polymer foam 150 may be applied to the ends of the plurality of cells 110 stacked on each other. In particular, the polymer foam 150 may be applied to cover a portion of the terrace 112 side of the electrode lead 120.

Additionally, when the polymer foam 150 is applied in a liquid state, the step S20 of applying the polymer foam 150 may further include a step of curing the polymer foam 150.

Accordingly, compared to the method of applying the polymer foam 150 to each battery cell 110 and then stacking a plurality of battery cells 110, the number of times the polymer foam 150 is applied may be reduced and the process may be simplified. Additionally, it is possible to prevent interference by the polymer foam 150 when stacking the plurality of battery cells 110. Additionally, the polymer foam 150 may have an effect of fixing the plurality of battery cells 110 stacked on each other so as to prevent them from being out of alignment.

In the step S30 of applying the resin 160, the resin 160 may be applied to the ends of the plurality of battery cells 110 stacked on each other. In particular, the resin 160 may be applied to cover a portion of the terrace portion 112 of each battery cell 110 where the electrode leads 120 do not protrude.

Additionally, when the resin 160 is applied in a liquid state, the step S30 of applying the resin 160 may further include a step of curing the resin 160.

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [List of Reference Numerals]

| | | | |
|---|---|---|---|
| 10: | Battery module | 100: | Cell assembly |
| 110: | Battery cell | 111: | Receiving portion |
| 112: | Terrace portion | 120: | Electrode lead |
| 121: | First extension | 122: | Second extension |
| 150: | First bonding body | 160: | Second bonding body |
| 300: | Busbar | 400: | Busbar frame |
| 500: | End cover | | |

## Claims

1. A cell assembly comprising:
a plurality of battery cells stacked on each other and each having an electrode lead;
a first bonding body formed to contact the electrode leads of the plurality of battery cells; and
a second bonding body formed to contact the plurality of battery cells and non-overlapped with the first bonding body,
wherein the first bonding body is made of a material having lower hardness than the second bonding body.

2. The cell assembly according to claim 1,
wherein the second bonding body contacts at least a portion of a terrace portion of each of the plurality of battery cells.

3. The cell assembly according to claim 1,
wherein the first bonding body comprises a polymer foam that foams under heat, and
the second bonding body comprises a resin composed of a synthetic resin.

4. The cell assembly according to claim 3,
wherein the polymer foam is applied to an outer surface of the plurality of battery cells to surround the electrode leads.

5. The cell assembly according to claim 3,
wherein the polymer foam comprises a silicone-based foam.

6. The cell assembly according to claim 3,
wherein the polymer foam has a porous structure.

7. The cell assembly according to claim 3,
wherein the electrode lead comprises:
a first extension extending from the battery cell and surrounded by the polymer foam; and
a second extension extending from the first extension and protruding further than the polymer foam.

8. The cell assembly according to claim 3,
wherein the electrode lead comprises a positive electrode lead and a negative electrode lead extending in different directions from the battery cell,
wherein the polymer foam comprises:
a first polymer foam formed to contact the positive electrode lead; and
a second polymer foam spaced apart from the first polymer foam and formed to contact the negative electrode lead.

9. The cell assembly according to claim 3,
wherein the polymer foam is applied to the ends of the plurality of battery cells.

10. A battery module comprising:
a module frame; and
a cell assembly accommodated in the module frame,
wherein the cell assembly comprises:
a plurality of battery cells stacked on each other and each having an electrode lead;
a first bonding body formed to contact the electrode leads of the plurality of battery cells; and
a second bonding body formed to contact the plurality of battery cells and non-overlapped with the first bonding body,
wherein the first bonding body is made of a material having lower hardness than the second bonding body.

11. The battery module according to claim 10,
wherein the second bonding body contacts at least a portion of the terrace portion of each of the plurality of battery cells.

12. The battery module according to claim 10,
wherein the first bonding body comprises a polymer foam that foams under heat, and
the second bonding body comprises a resin composed of a synthetic resin.

13. The battery module according to claim 12, further comprising:
a busbar frame mounted with a busbar to which the electrode leads are connected,
wherein the polymer foam is positioned between the plurality of battery cells and the busbar frame.

14. The battery module according to claim 13, further comprising:
an end cover covering an open end of the module frame,
wherein the busbar frame is positioned between the polymer foam and the end cover.

15. The battery module according to claim 13,
wherein the electrode lead comprises:
a first extension extending from the battery cell and surrounded by the polymer foam; and
a second extension extending from the first extension and protruding further than the polymer foam and connected to the busbar.

16. A method for manufacturing a cell assembly comprising:
a step of stacking a plurality of battery cells, each of which has an electrode lead;
a step of applying a polymer foam to the stacked plurality of battery cells so as to contact the electrode leads of the plurality of battery cells; and
a step of applying a resin to the stacked plurality of battery cells so as to contact the plurality of battery cells,
wherein the polymer foam and the resin are non-overlapped.

17. The method for manufacturing a cell assembly according to claim 16,
wherein the step of applying the polymer foam and the step of applying the resin are performed simultaneously or sequentially.
